# EUROPEAN PATENT APPLICATION

(11) **EP 3 534 311 A1**
(43) Date of publication of application: **04.09.2019**
(21) Application number: 18020085.9
(22) Date of filing: 01.03.2018
(51) Int. Cl.: G06Q 20/02, G06Q 20/06

(54) **MONEY TRANSFER METHOD**

(71) Applicant: Tuturas Haiduc, Vasile Cosmin, 440103 Satu Mare (RO)
(72) Inventor: Tuturas Haiduc, Vasile Cosmin, 440103 Satu Mare (RO)
(74) Representative: Stanciu, Adelina

(57) **Abstract**

The invention presents a money transfer method for the persons that do not have a bank account wherein, in a first stage, an application is installed on the mobile phone of the sender, then an automatic registration of the user as sender is made in the crypto-currency exchange, then the identity cards of the sender and beneficiary are scanned, then the sender who has a virtual coin sends one virtual coin or a fraction of a virtual coin to the beneficiary, then the virtual coin is converted in USD using a protocol with the same crypto-currency exchange, meanwhile the money instantaneously arrive in the account of the post office which is an account in the same bank as the crypto-currency exchange, then the post office verifies and updates the information regarding the beneficiary and sends him the money as ordered by the sender converted in the currency of the country in which the post office is located.

## Description

The invention presents a money transfer method especially for the persons that do not have a bank account.

It is estimated that there are a lot of persons all over the world that are considered to be non-banking, which means that these persons do not have bank accounts or they are not used with the banking financial payment devices.

It is also known that most of these persons send cash money through occasional deliverers risking that the money to be lost or not arriving at the destination.

It is rather difficult and risky to send money to different locations because the method is not controllable and it is not as safe as a banking transfer should be.

In the banking transactions field, which are non-cash, it is known the patent document No. AU 2014101277 A1**,** that presents an exclusive banking method for financial loans that uses a virtual coin known as cryto-currency. The major disadvantage of this invention is that it is not working with cash and this makes it limited only to operations made by banks, financial institutions and monetary funds. Therefore, even it uses a cryptocurrency, the method is not accessible to private persons for cash non-banking operations.

There are known several classic money transfer methods, for private persons such as: Western Union, Money Gram .

Their disadvantage is that they request the interested person to move to a post office, to fill in some forms, to pay very big commissions, which means lost time, expenses, human effort and, most of all, the fact that the person depends on an office located in a certain place. Therefore, the existent solutions are not accessible to any person no matter its location.

The technical problem to be solved by the invention is to develop a method for money transfer accessible to the persons who do not have bank accounts through the mobile phone.

The money transfer method to a predefined destination that do not have a bank account, according to the invention, solves the technical problem by the fact that in a first stage, an application is installed on the mobile phone of the sender, then the automatic registration of the sender is made on the crypto-currency exchange, followed by the stage in which the identity documents of the sender and receiver are scanned in the same application, then the sender that owns a virtual coin sends a coin or a fraction of a coin to the receiver, then the virtual coin is converted in USD using a protocol signed with an exchange of virtual currency or its own exchange, meanwhile the converted amount instantaneously arrives in the post office account that checks and updates the information on the receiver of the money and then sends the money to him converted by the bank of the post office in the local currency.

The money transfer method, according to the invention, has the following advantages:
- The money transfer is fast, accessible and convenient;
- It minimizes the time of the transfer;
- Offers a maximum of comfort to the user.

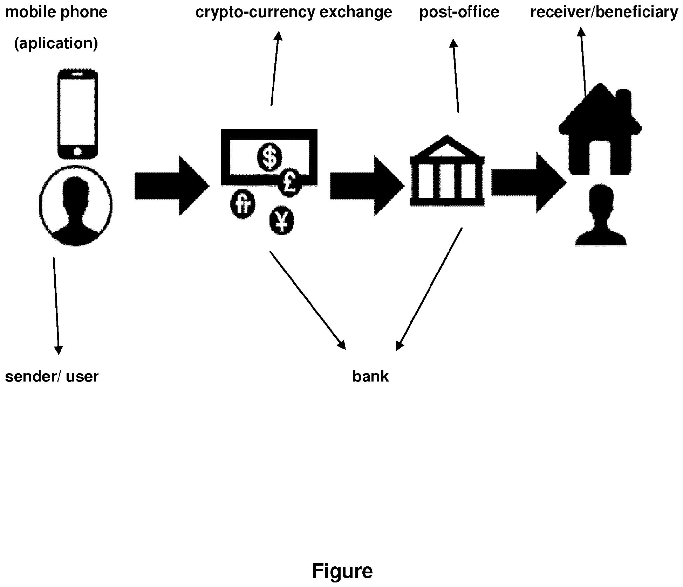

Further on, a practical example of the invention is presented connected with the figure that represents a scheme of the money transfer method.

The money transfer method for the persons who do not have bank accounts, according to the invention goes on like this: in a first stage, an application is installed on the mobile phone of the sender, then the automatic registration of the user as sender is made on a virtual coin platform. In the next stage, when a money transfer is intended to be made to a beneficiary who does not have a bank account, the sender which is also the payer is scanning his identity card.

The identification can also be made by introducing the data in the application.

Then the sender who owns virtual coin orders the payment of a virtual coin or a fraction of a virtual coin to a predefined beneficiary.

Then, the sender who owns a virtual coin orders the delivery of a virtual coin or a fraction of a virtual coin to the predefined beneficiary.

In this stage, the virtual coin/ crypto-currency already listed on the stock market with an inner value, the exchange for crypto-currency converts it into a real coin, usually USD. This amount of money instantly arrives in the account of a post office that has the account in the same bank as the crypto-currency exchange, as shown in the picture.

The exchange for crypto-currency exchanges the money into FIAT money or any other currency, USD or Euro at the exchange rate of the day.

In the same time, the information regarding the beneficiary arrive at a post office that automatic updates it by comparison with the information in its own data base.

In the last phase, the post office sends the real money in cash to the predefined beneficiary by specific means.

It is also required that the post office and the crypto-currency exchange have accounts in the same bank.

The crypto-currency exchange can be an external local already existing one or could be optimized right through the application already installed on the mobile phone.

For a better understanding of the money transfer method for the persons who do not have bank accounts, through the mobile phone, let us say that the user wishes to send some money to his father who lives in another country:
- The user must log in the application installed on his mobile phone, then the identity cards are by either scanned or manually tipped in the application, with a specification that the sender can also make the identification of the receiver if he knows the data;
- The application questions the user if he agrees with the exchange rate of the crypto-currency communicated by the crypto-currency exchange;
- If the answer is YES, the crypto-currency exchange exchanges the crypto-currency into USD, for example and sends the money to the post office in the country of the receiver providing that the post office has an account in the same bank as the crypto-currency exchange;
- The post office assigns a code to that money and this code corresponds to the beneficiary of the sum;
- The money arrive at the beneficiary by specific post office means.

## Claims

Money transfer method for the persons who do not have bank accounts, **wherein,** in a first stage an application is installed on the mobile phone of the sender, then an automatic registration of the user as sender is made in the crypto-currency exchange, then the identity cards of the sender and beneficiary are scanned, then the sender who has a virtual coin sends one virtual coin or a fraction of a virtual coin to the beneficiary, then the virtual coin is converted in USD using a protocol with the same crypto-currency exchange, meanwhile the money instantaneously arrive in the account of the post office which is an account in the same bank as the crypto-currency exchange, then the post office verifies and updates the information regarding the beneficiary and sends him the money as ordered by the sender converted in the currency of the country in which the post office is located.
